# EUROPÄISCHE PATENTSCHRIFT

(11) **EP 2 096 055 B1**
(45) Veröffentlichungstag und Bekanntmachung des Hinweises auf die Patenterteilung: **18.05.2016**
(21) Anmeldenummer: 09153159.0
(22) Anmeldetag: 19.02.2009
(51) Int. Cl.: B29C 49/42, B29C 49/06, B29C 49/64, B65G 47/84

(54) **Vorrichtung und Verfahren zum Erwärmen von Behältnissen**
Device and process for heating containers
Dispositif et procédé de chauffage de récipients

(30) Priorität: 28.02.2008 DE 102008011773
(43) Veröffentlichungstag der Anmeldung: 02.09.2009
(73) Patentinhaber: Krones AG, 93073 Neutraubling (DE)
(72) Erfinder: Spitzer, Thomas, 93073 Neutraubling (DE)
(74) Vertreter: Bittner, Bernhard

(56) Entgegenhaltungen:
- EP-A1- 1 690 813
- EP-A2- 1 142 807
- DE-A1-102005 029 916
- DE-A1-102005 048 126
- DE-A1-102005 048 358
- US-A1- 2006 182 610
- US-B1- 6 761 556

## Beschreibung

Die vorliegende Erfindung bezieht sich auf eine Vorrichtung und ein Verfahren zum Erwärmen von Behältnissen gemäß Ansprüchen 1 und 12. Im Bereich der getränkehersteilenden Industrie ist es seit längerer Zeit bekannt, Kunststoffbehältnisse zu verwenden, in welche die jeweiligen Getränke oder Nahrungsmittel abgefüllt werden. Bei der Herstellung dieser Kunststoffbehältnisse werden so genannte Vorformlinge bzw. Preforms verwendet, welche mit Hilfe einer Blaseinrichtung zu Behältnissen expandiert werden. Vor diesem Expansionsprozess werden die Kunststoffbehältnisse in einer Heizeinrichtung erwärmt, um in diesem erwärmten Zustand eine Vorrichtung und ein Verfahren zum Erwärmen von Behältnissen gemäß expandiert werden zu können. US-B-6761556 offenbart eine Vorrichtung und ein Verfahren zum Erwärmen von Behältnissen gemäß dem Oberbegriff der Ansprüche 1 und 12.

Derartige Heizeinrichtungen weisen üblicherweise eine Transporteinrichtung auf, beispielsweise eine Kette mit einer Vielzahl von Halteelementen für die Vorformlinge, wobei diese Transporteinrichtung diese Behältnisse durch die Heizeinrichtung führt. Weiterhin ist eine Zuführeinrichtung wie ein Eintaktrad vorgesehen, welches die Behältnisse vereinzelt dieser Transporteinrichtung zuführt.

Um die Behältnisse von dem Eintaktrad an die Transporteinrichtung zu übergeben ist üblicherweise an der Transporteinrichtung ein Stützstern vorgesehen, der die Behältnisse während der Übergabe abstützt. Dieser Stützstern ist einerseits ein sehr aufwändiges Bauteil, da er an seinem Außenumfang exakt auf die Gestalt der Behältnisse abgestimmt sein muss. Daneben muss auch die Position der Zuführeinrichtung genau auf die Position dieses Stützsterns angepasst sein. Bei einem Verschleiß der Transporteinrichtung, welche beispielsweise als Heizdornkette ausgeführt sein kann, nimmt diese Dornkette einen anderen Verlauf ein, auf den die Führung angepasst werden kann. Bei den aus dem Stand der Technik bekannten Systemen wird der Vorformling auf den Stützstern übergeben, der damit einen festen Radius vorgibt. Durch diesen festen Übergaberadius können im Falle eines Verschleißes der Transportkette erhebliche Übergabeprobleme entstehen und im schlimmsten Fall muss die Produktion unterbrochen werden.

Der vorliegenden Erfindung liegt daher die Aufgabe zugrunde, eine Vorrichtung zum Erwärmen von Behältnissen zu schaffen, welche in der Herstellung vereinfacht ist. Insbesondere soll eine Möglichkeit geschaffen werden, auf den erwähnten Stützstern zu verzichten.

Dies wird erfindungsgemäß durch eine Vorrichtung nach Anspruch 1 und ein Verfahren nach Anspruch 12 erreicht. Vorteilhafte Ausführungsformen und Weiterbildungen sind Gegenstand der Unteransprüche.

Eine Vorrichtung zum Erwärmen von Behältnissen weist eine Transporteinrichtung auf, welche die Behältnisse gegenüber wenigstens einer Heizeinrichtung transportiert. Weiterhin ist eine Übergabeeinheit vorgesehen, welche in der Transportrichtung der Behältnisse stromaufwärts bezüglich der Transporteinrichtung angeordnet ist und welche die Behältnisse in einem Übergabebereich vereinzelt an die Transporteinrichtung übergibt. Dabei weist die Übergabeeinheit eine drehbare Scheibe auf, sowie eine radial außerhalb der drehbaren Scheibe angeordnete Führungsschiene und die drehbare Scheibe und die Führungsschiene sind derart angeordnet, dass die Behältnisse zwischen einem Außenumfang der drehbaren Scheibe und der Führungsschiene transportierbar sind. Erfindungsgemäß ragt die Führungsschiene bis in den Übergabebereich.

Bei der Übergabeeinheit handelt es sich insbesondere um ein Transportrad, welches die Behältnisse vereinzelt an die Transporteinrichtung übergibt. Die Behältnisse werden dabei zwischen einem Außenumfang der erwähnten drehbaren Scheibe und der Führungseinrichtung geführt, wobei die Führungseinrichtung bevorzugt den vereinzelten Transport der Behältnisse ermöglicht. Es wird vorgeschlagen, die Führung der Behältnisse gegenüber der drehbaren Scheibe bis hinein in den Übergabebereich zu führen, wobei in diesem Übergabebereich die Übernahme durch die Transporteinrichtung erfolgt. Damit werden die Behältnisse so lange gestützt, bis sie im Übergabebereich an die Transporteinrichtung im Wesentlichen vollständig übergeben wurden. Auf diese Weise ist es möglich, auf den Führungsstern zu verzichten.

Bei einer vorteilhaften Ausführungsform weist die Transporteinrichtung eine Vielzahl von Eingriffselementen auf, welche in eine Mündung der Behältnisse eingreifen. Damit greifen bevorzugt diese Eingriffselemente von oben in die Mündung der Behältnisse ein und so werden die Eingriffselemente nicht durch die oben erwähnte Führungsschiene behindert, da diese sich vorzugsweise in der Transportrichtung der Behältnisse erstreckt. Die Führungsschiene endet damit vorzugsweise erst in einem Bereich, in dem die Eingriffselemente vollständig in die Mündung der Behältnisse eingedrungen sind. Bei dieser Ausführungsform greifen, wie erwähnt, die Eingriffselemente von oben in die Behältnisse ein und diese werden nach unten hängend transportiert. Es wäre jedoch auch möglich, dass die Eingriffselemente von unten in die Mündung der Behältnisse eingreifen, wobei in diesem Fall die Behältnisse um 180° gedreht wären.

Erfindungsgemäß ist die Position der Führungsschiene gegenüber der Transporteinrichtung verstellbar. Auf diese Weise ist es möglich, einen Ausgleich für auftretenden Verschleiß der Transporteinrichtung zu schaffen.

Bei einer weiteren vorteilhaften Ausführungsform ist an der Unterseite wenigstens eines Eingriffselements ein Positionserkennungselement anordenbar. Vorzugsweise ist eine Zirkelspitze angeordnet, mit der eine auf dem Segment vorhandene Markierung überprüft werden kann. Anhand dieser Markierung kann die genaue Position der Führungsschiene ausgerichtet werden. Es wäre umgekehrt auch möglich, ein Markierungselement an dem Eingriffselement anzubringen, welches eine Markierung auf der Führungsschiene anbringt.

Bei einer weiteren vorteilhaften Ausführungsform weist die drehbare Scheibe eine Vielzahl von Aufnahmeausnehmungen für die Behältnisse auf. Mit Hilfe dieser Aufnahmeausnehmungen werden die Behältnisse vereinzelt zwischen der drehbaren Scheibe und der Führungsschiene geführt. Die Führungsschiene ist damit bevorzugt stehend gegenüber der Anlage bzw. auch gegenüber den einzelnen Behältnissen angeordnet.

Bei einer weiteren vorteilhaften Ausführungsform weist die Führungsschiene wenigstens zwei voneinander trennbare Segmente auf. Dabei ist es möglich, insbesondere das zweite Segment, welches in den Übergabebereich ragt, hinsichtlich seiner Position zu verändern.

Bei einer weiteren vorteilhaften Ausführungsform verjüngt sich die Führungsschiene in der radialen Einrichtung der drehbaren Scheibe in Richtung des Übergabebereichs. Auf diese Weise wird ein Einbringen der Führungsschiene in den Übergabebereich vereinfacht.

Bei einer weiteren vorteilhaften Ausführungsform weist die Transporteinrichtung ein Transportrad auf, entlang dessen die Behältnisse geführt werden, sowie eine gegenüber dem Transportrad feststehende Stützeinrichtung, welche die Behältnisse gegenüber dem Transportrad stützt.

Bei dieser Vorrichtung werden, wie oben erwähnt, die Behältnisse durch die Heizeinrichtung geführt und gelangen anschließend wieder in den Bereich dieses Transportrades. An dieses Transportrad kann sich eine weitere Übernahmeeinheit anschließen, welche die Behältnisse übernimmt. Während im Stand der Technik auch in diesem Bereich der Stützstern dazu diente, um die Position der Behältnisse auszurichten, wird besagte feststehende Stützeinrichtung vorgeschlagen, welche anstelle des Stützsterns eine Ausrichtung der Behältnisse bewirkt. Vorzugsweise ist diese Stützeinrichtung oberhalb des Transportrads angeordnet.

Bei einer weiteren vorteilhaften Ausführungsform ist die Übergabeeinheit in ihrer Gesamtheit gegenüber der Transporteinrichtung verschiebbar.

Bei einer weiteren vorteilhaften Ausführungsform weist die Vorrichtung eine Sensoreinrichtung auf, welche eine Position und/oder Orientierung der Behältnisse, insbesondere gegenüber dem jeweiligen Eingriffselement, erfasst. Damit wird bevorzugt am Ende der Heizeinrichtung die Orientierung der Behältnisse erfasst, womit bei unter der Orientierung nicht nur die Lage einer Längsachse der Behältnisse verstanden wird, sondern auch die gesamte Anordnung des Behältnisses. Beispielsweise kann mit Hilfe der Sensoreinrichtung festgestellt werden, ob sich das Behältnis gegenüber den Eingriffselementen verschoben hat bzw. heruntergerutscht ist. Weiterhin kann diese Sensoreinrichtung mit einer Aussondereinheit gekoppelt sein, welches fehlerhafte orientierte bzw. positionierte Behältnisse aussondert.

Diese Vorrichtung weist eine Transporteinrichtung auf, welche die Behältnisse gegenüber wenigstens einer Heizeinrichtung transportiert sowie mit einer Übergabeeinheit, welche in der Transportrichtung der Behältnisse stromaufwärts bezüglich der Transporteinrichtung angeordnet ist und welche die Behältnisse in einem Übergabebereich vereinzelt an die Transporteinrichtung übergibt, wobei die Übergabeeinheit eine drehbare Scheibe aufweist, sowie eine radial außerhalb dieser drehbaren Scheibe angeordnete Führungsschiene und die drehbare Scheibe sowie die Führungsschiene derart angeordnet sind, dass die Behältnisse zwischen einem Außenumfang der drehbaren Scheibe und der Führungsschiene transportierbar sind. Die Vorrichtung weist eine Sensoreinrichtung auf, welche eine Position der Behältnisse erfasst.

Bei dieser Ausführungsform wird vorgeschlagen, die Position bzw. Lage der Behältnisse zu erfassen und insbesondere einen für diese Erfassung charakteristischen Wert weiterzuleiten.

Auch mit Hilfe dieser Sensoreinrichtung ist es möglich, auf das oben erwähnte Stützrad zu verzichten, wobei bei dieser erfindungsgemäßen Ausgestaltung zusätzlich oder neben einem Ausgleich der Behältnisse mit Hilfe der besagten Sensoreinrichtung geprüft wird, ob die Behältnisse korrekt gegenüber der Transporteinrichtung angeordnet sind bzw. geführt werden. Fehlerhaft ausgerichtete Behältnisse können hier in der Folge ausgesondert werden.

Die Vorrichtung der obengeschriebenen Art weist eine Anlage auf, sowie eine stromabwärts bezüglich der Transporteinrichtung angeordnete Behandlungseinheit. Die Behandlungseinheit weist eine Steuerungseinrichtung auf, welche mit der Sensoreinrichtung kommuniziert.

Bei der Behandlungseinheit kann es sich um jegliche Behandlungseinheit handeln, beispielsweise eine weitere Transporteinrichtung, eine Füllmaschine, eine Etikettiermaschine, eine Verpackungsmaschine und dergleichen. So bald die Steuereinrichtung ein Signal seitens der Sensoreinrichtung erhält, welches darauf hinweist, dass ein bestimmtes Behältnis fehlorientiert ist, kann die Steuereinrichtung wiederum eine Aussonderung dieses Behältnisses in die Wege leiten. Bevorzugt handelt es sich um eine Behandlungseinheit, welche die Behältnisse vereinzelt behandelt.

Die vorliegende Erfindung ist weiterhin auf ein Verfahren gemäß Auspruch 12 zum Erwärmen von Behältnissen gerichtet, wobei die Behältnisse mit einer Transporteinrichtung gegenüber wenigstens einer Heizeinrichtung transportiert werden und von einer Übergabeeinheit, welche in der Transportrichtung der Behältnisse stromaufwärts bezüglich der Transportrichtung angeordnet ist, in einem Übergabebereich vereinzelt eine Transporteinrichtung übergeben werden. Dabei werden die Behältnisse in der Übergabeeinheit zwischen einer drehbaren Scheibe und einer radial außerhalb dieser drehbaren Scheibe angeordneten Führungsschiene geführt.

Die Behältnisse werden bis in den Übergabebereich von der Führungsschiene geführt, d.h. die Behältnisse werden noch von der Führungsschiene geführt, während sie bereits von der Transporteinrichtung gegriffen werden. Bevorzugt greifen Eingriffselemente der Transporteinrichtung in einer senkrecht zu der Transportrichtung der Behältnisse stehenden Richtung in die Behältnisse ein.

Damit wird auch bei diesem Verfahren vorgeschlagen, die Führung der Behältnisse durch die Führungsschiene zu bewerkstelligen.

Weitere Vorteile und Ausführungsformen ergeben sich aus den beigefügten Zeichnungen:

Darin zeigen:
- Fig. 1a: eine Darstellung einer Vorrichtung nach dem Stand der Technik;
- Fig. 1b: eine Detaildarstellung der Vorrichtung aus Fig. 1a;
- Fig. 2: eine Darstellung einer erfindungsgemäßen Vorrichtung;
- Fig. 3: eine Detaildarstellung der Vorrichtung aus Fig. 2;
- Fig. 4: eine weitere Detaildarstellung der Vorrichtung aus Fig. 2;
- Fig. 5: eine weitere Detaildarstellung der Vorrichtung aus Fig. 2;
- Fig. 6: eine weitere Detaildarstellung der Vorrichtung aus Fig. 2;
- Fig. 7: eine Seitenansicht auf ein Detail der Vorrichtung aus Fig. 2;
- Fig. 8: eine weitere detaillierte Darstellung der Vorrichtung aus Fig. 2;
- Fig. 9: eine Draufsicht auf einen Teil der Vorrichtung aus Fig. 2;
- Fig. 10: eine weitere Ansicht des in Fig. 8 gezeigten Details;
- Fig. 11a: eine Draufsicht auf eine Führungsschiene;
- Fig. 11b: eine Detaildarstellung der Führungsschiene aus Fig. 11a;
- Fig. 11c: eine Veranschaulichung der Funktionsweise der Führungsschiene aus Fig. 11a;
- Fig. 11d: ein weiteres Detail der Führungsschiene aus Fig. 11a;
- Fig. 12a: eine Querschnittsansicht eines Eingriffselements;
- Fig. 12b: eine weitere Ansicht des Eingriffselements aus Fig. 12a;
- Fig. 12c: eine Explosionsansicht des Eingriffselements aus Fig. 12a; und
- Fig. 12d: eine Draufsicht auf das Eingriffselement aus Fig. 12a.

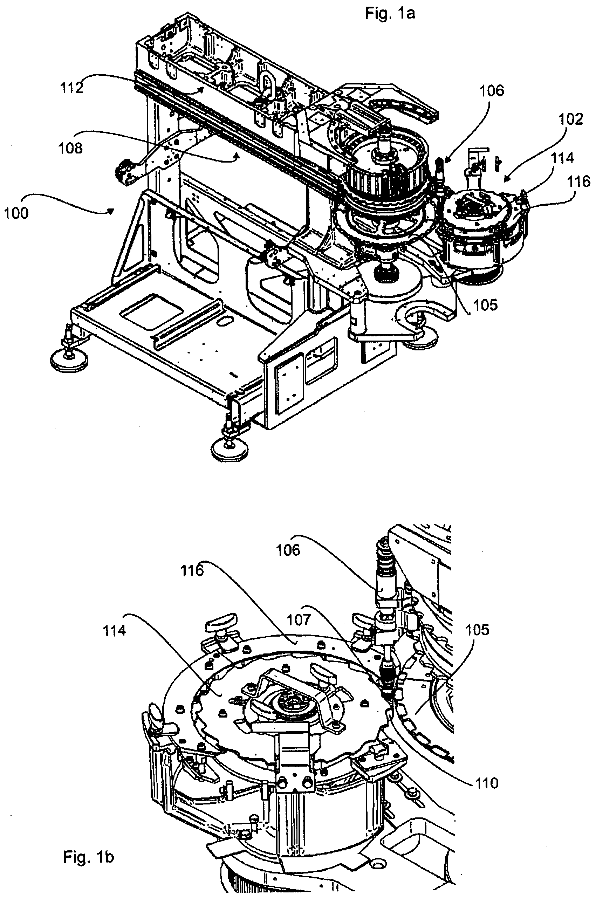

Figur 1a zeigt eine Vorrichtung 100 zum Erwärmen von Behältnissen nach dem Stand der Technik. Diese Vorrichtung 100 weist eine Transporteinrichtung auf, die in ihrer Gesamtheit mit dem Bezugszeichen 108 gekennzeichnet ist, mit deren Hilfe die Vorformlinge um eine Heizeinrichtung 112 herumgeführt werden. Entlang dieser Heizstrecke werden die Vorformlinge, insbesondere mit Ausnahme ihres Mündungsbereiches, erwärmt um anschließend mittels Druckluft expandiert werden zu können. Das Bezugszeichen 102 kennzeichnet eine Übergabeeinheit wie einen Transportstern, mit dessen Hilfe die Behältnisse vereinzelt an die Transporteinrichtung 108 übergeben werden. Das Bezugszeichen 105 bezieht sich auf ein Stützrad, welches unterhalb der Transporteinrichtung 108 angeordnet ist und welches während der Übergabe die Behältnisse gegenüber der Übergabeeinheit 102 abstützt, damit diese von den einzelnen Eingriffselementen 106 gegriffen werden können.

Figur 1b zeigt eine detaillierte Darstellung der Fig. 1a gezeigten Vorrichtung. Man erkennt, dass hier zwar eine Führungsschiene 116 angeordnet ist, diese jedoch vor dem Bereich endet, in dem das Behältnis von der Übergabeeinheit 102 bzw. der drehbaren Scheibe 114 an ein Eingriffselement 106 übergeben wird. Dieses Eingriffselement dringt von oben in eine Mündung des Behältnisses 110 ein und führt dieses auf diese Weise. In diesem Übergabebereich wird das Behältnis einerseits von der drehbaren Scheibe 114 und andererseits mit dem mit dieser drehbaren Scheibe 114 zusammen wirkenden Stützrad 105 gehalten.

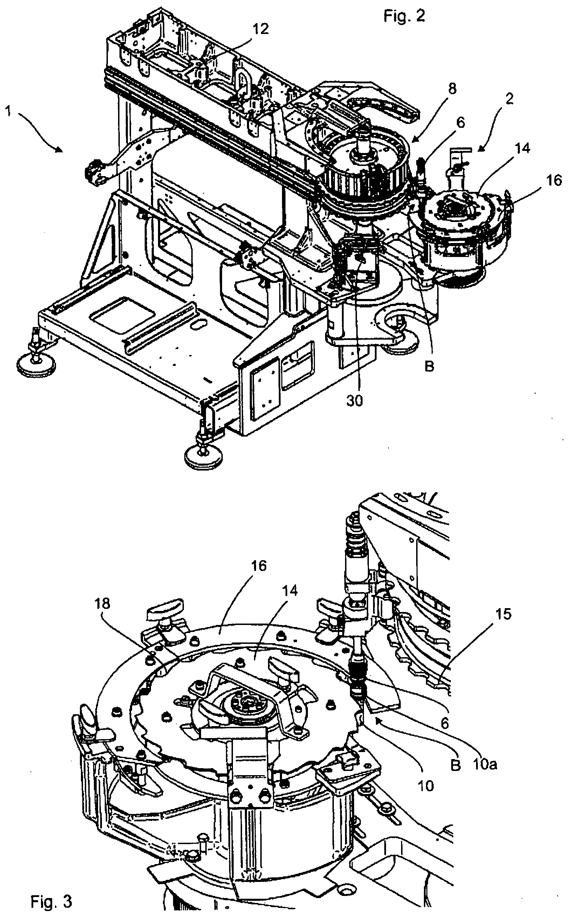

Figur 2 zeigt eine erfindungsgemäße Vorrichtung. Bei dieser Vorrichtung wurde auf das aufwändige Stützrad 105 verzichtet. Daneben ist eine Ausrichteeinheit mit einer Sensoreinrichtung 30 erkennbar, welche unten genauer erläutert wird. Das Bezugszeichen 2 kennzeichnet die Übergabeeinheit in ihrer Gesamtheit und das Bezugszeichen 8 die Transporteinrichtung in ihrer Gesamtheit.

Figur 3 zeigt eine Detaildarstellung der in Fig. 2 gezeigten Vorrichtung. Man erkennt hier wiederum die drehbare Scheibe 14, wobei die Behältnisse in Ausnehmungen 18, die am Außenumfang der drehbaren Scheibe 14 angeordnet sind, gegenüber der Führungsschiene 16 geführt werden. Diese Führungsschiene 16 ragt hier bis in einen Übergabebereich B, in dem die Behältnisse 10 von den Eingriffselementen 6 übernommen werden. Dabei greifen diese Eingriffselemente 6 in eine Mündung 10a der Behältnisse 10 ein. Bis zu diesem vollständigen Eingriff werden jedoch die Behältnisse 10 zwischen der drehbaren Scheibe 14 und der Führungsschiene 16 geführt bzw. gehalten. Vorzugsweise stützen sich dabei die Tragringe der Behältnisse gegenüber der drehbaren Scheibe 14 und der Führungsschiene 16 ab.

Damit werden die Behältnisse im Bereich des Einlaufsterns zum Heizrad länger, genauer gesagt bis zum vollständigen Einfahren der Eingriffseinrichtungen 6 in die Mündung, gehalten. Die Führungseinrichtung 16 ist damit gegenüber zum Stand der Technik bis zum eigentlichen Greifer 6 der Preforms verlängert, um auf diese Weise den im Stand der Technik vorhandenen Stützstern 105 zu eliminieren. Durch diese Führung kann die Übergabe der Behältnisse individuell eingestellt und auf die Heizdornkette, an der die Eingriffselemente 6 angeordnet sind, angepasst werden. Das Bezugszeichen 15 bezieht sich auf ein Führungsrad der Transporteinrichtung 8.

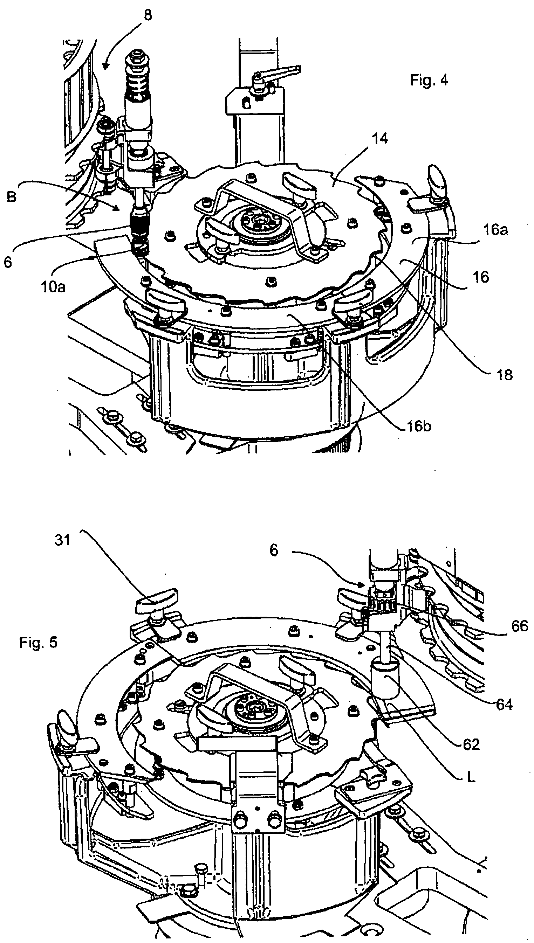

Figur 4 zeigt eine weitere Detaildarstellung der in Fig. 2 gezeigten Vorrichtung. Man erkennt hier insbesondere den Kopf 6a, der in die Mündung der Behältnisse eingreift. Weiterhin ist auch erkennbar, dass hier die Führungsschiene 16 zwei Segmente 16a und 16b aufweist, die voneinander lösbar sind. Die Übergabeeinheit 2 kann in ihrer Gesamtheit gegenüber der Transporteinrichtung 8 verschoben werden. Genauer gesagt kann der Abstand zwischen der Übergabeeinheit 2 und der Transporteinrichtung 8 verändert werden.

Figur 5 zeigt eine weitere Detaildarstellung. Man erkennt hier, dass die Führungsschiene 16 an ihrem Ende eine unten genauer erläuterte Abschrägung aufweist. Das Eingriffselement 6 weist einen Kopf 62 auf, an dessen Unterseite ein Markierungsmittel 20 wie eine Messerspitze oder auch ein Schreibelement vorgesehen ist. Dieses Markierungserkennungselement erkennt eine Linie L auf der Führungsschiene 16, so dass ein Abgleich mit dieser erfolgen kann. Über ein Zahnrad 66 wird eine Drehung der Eingriffselemente 6 um ihre Längsachse während des Transports der Behältnisse 10 durch die Heizeinrichtung 12 erreicht.

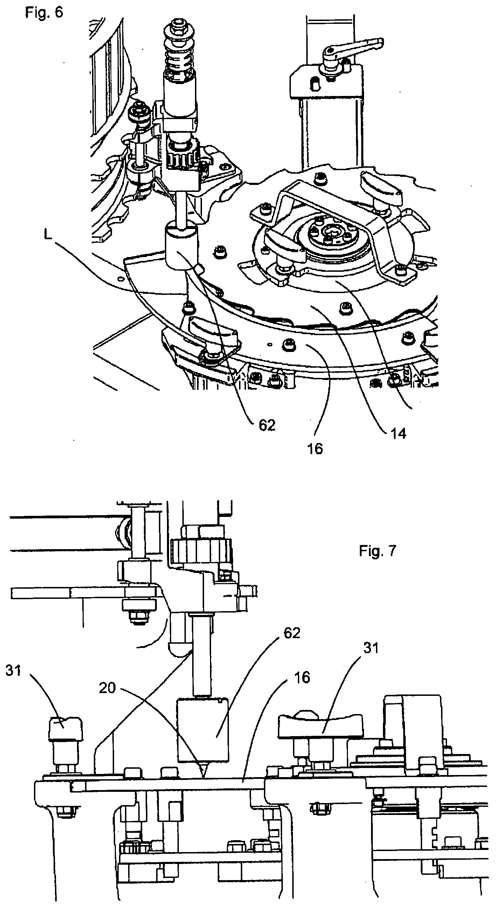

Figur 6 zeigt eine weitere Darstellung. Man erkennt auch hier wieder die Markierungslinie L, die in die Führungsschiene 16 markiert wurde. Anhand dieser Markierungslinie L kann eine Ausrichtung der Führungsschiene 16 gegenüber der Heizeinrichtung 12 vorgenommen werden.

Figur 7 zeigt eine Seitenansicht der in Figur 6 gezeigten Darstellung. Man erkennt hier das Markierungsmittel 20, welches eine Markierung auf der Führungsschienen 16 anbringt. Weiterhin ist eine Vielzahl von Schraubelementen 31 gezeigt, mit deren Hilfe die Führungsschiene 16 an einem Gestell und damit fest gegenüber der in Figur 6 gezeigten drehbaren Scheibe angeordnet werden kann.

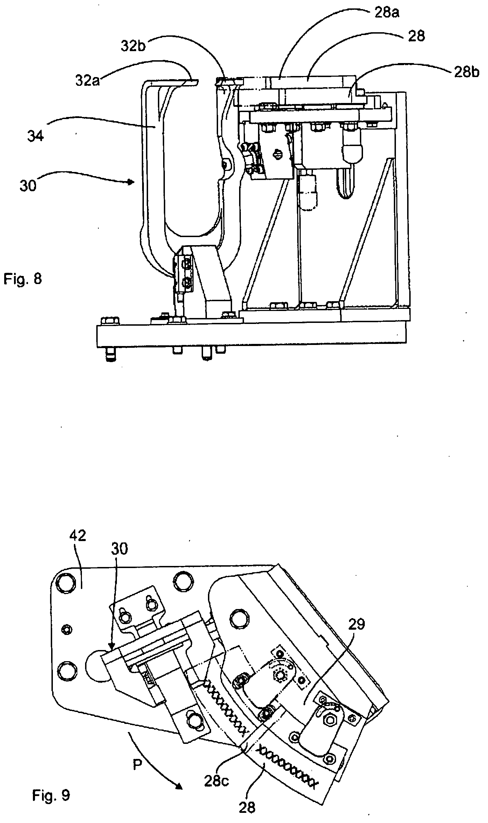

Figur 8 zeigt ein weiteres Detail der Vorrichtung. In Figur 8 ist einerseits eine Sensoreinrichtung 30 zu erkennen, welche eine exakte Positionierung bzw. eine genaue Lage der Behältnisse erfasst. Daneben ist auch eine Stützeinrichtung 28 vorgesehen, welche eine exakte Positionierung der Behältnisse am Auslauf der Heizeinrichtung bewirkt. Im Stand der Technik wurde diese Stützfunktion ebenfalls von dem Stützrad wahrgenommen. Diese Stützeinrichtung 28 weist einen Vorsprung 28a auf, wobei die Tragringe der Behältnisse gegenüber dem oberen Vorsprung 28a abgestützt werden. Auch in der radialen Richtung nimmt dieser Vorsprung 28a während der Übergabe der Behältnisse von der Eingriffseinrichtung 6 an weitere Greifmittel wie Greifzangen eine Stützung in radialer Richtung wahr. Die Stützeinrichtung 28 ist stationär angeordnet.

Im Falle von Figur 8 ist im Bereich der Stützeinrichtung 28 noch das Eingriffsmittel 6 vorgesehen (nicht darstellt) und im gleichen Bereich nähert sich ein weiteres Greifmittel wie eine Greifzange (ebenfalls nicht dargestellt) von unten, welche das Behältnis übernimmt. Die Stützeinrichtung erfüllt damit einen ähnlichen Zweck wie die Führungseinrichtung 6 am Eingang der Heizvorrichtung. Bei der Übergabe der Behältnisse befindet sich in Fig. 8 das Eingriffsmittel oberhalb der Stützeinrichtung 28 bzw. des Vorsprungs 28a und das weitere Greifmittel wird in radialer Richtung an das Behältnis 10 herangeführt.

Damit wird beim Herausnehmen der aufgeheizten Vorformlinge aus der Heizdornkette bei der Übergabe an den Transportstern der einzelne Vorformling mittels des feststehenden Segments 28 bzw. der Stützeinrichtung 28 abgestützt.

Das Bezugszeichen 30 bezieht sich auf eine Sensoreinrichtung, welche eine korrekte Position bzw. Orientierung der Vorformlinge prüft. Diese Sensoreinrichtung 30 weist zwei Taster 32a und 32b auf. Falls beispielsweise der Vorformling im Laufe des Transports durch die Heizeinrichtung gegenüber dem (nicht dargestellten) Eingriffselement abgerutscht ist, wird sein Tragring einen oder beider Taster 32a, 32b auslösen. Falls der Preform gegenüber seiner Solllage verkippt ist, wird jedenfalls einer der beiden Messtaster 32a, 32b ausgelöst. Auf diese Weise wird mittels der Sensoreinrichtung 30 die Auslaufhöhe der Vorformlinge geprüft. Falls ein Vorformling in der Heizeinrichtung bzw. dem Heiztunnel etwas von seinem Greifer gerutscht ist, wird dies über die in Figur 8 gezeigte Höhenabfrage vor der Übergabe abgefragt und bei nicht korrekter Lage kann der betreffende Vorformling über einen Preform-Pusher an dem Transportstern ausgeleitet werden. Die beiden Messtaster sind dabei an einer u-förmigen Halterung 34 angeordnet, wobei der Preform durch diese u-förmige Halterung 34 hindurch treten kann. Anstelle der beiden Taster könnten jedoch auch optische Mittel wie Lichtschranken oder dergleichen eingesetzt werden.

Figur 9 zeigt eine Draufsicht auf die in Fig. 8 gezeigte Vorrichtung. Man erkennt hier, dass die Sensoreinrichtung 30 in der Transportrichtung P vor der Stützeinrichtung 28 angeordnet ist. Die Stützeinrichtung 28 stützt sich hier gegen den Kragen der Preforms ab und hält damit deren senkrechte Position aufrecht. Die Stützeinrichtung 28 ist fest an einem Gestell 29 der Vorrichtung angeordnet. Bei einer bevorzugten Ausführungsform weist die Stützeinrichtung 28 an ihrem äußerem Rand 28c eine Schräge auf, d. h. nach außen hin verjüngt sich die Stützeinrichtung 28. Das Bezugszeichen 28c bezieht sich auf eine weitere Schräge, die am Anfang des Transportpfades der Behältnisse gegenüber der Stützeinrichtung 28 liegt. Mit dieser Schräge 28c kann ein leichtes Verrutschen der Behältnisse 10 ausgeglichen werden.

Weiterhin weist die Stützeinrichtung 28 einen kreisbogenförmigen Außenumfang auf, der an die Transportbahn des Transportrades bzw. der Eingriffselemente 6 (vgl. Fig. 3) angepasst ist.

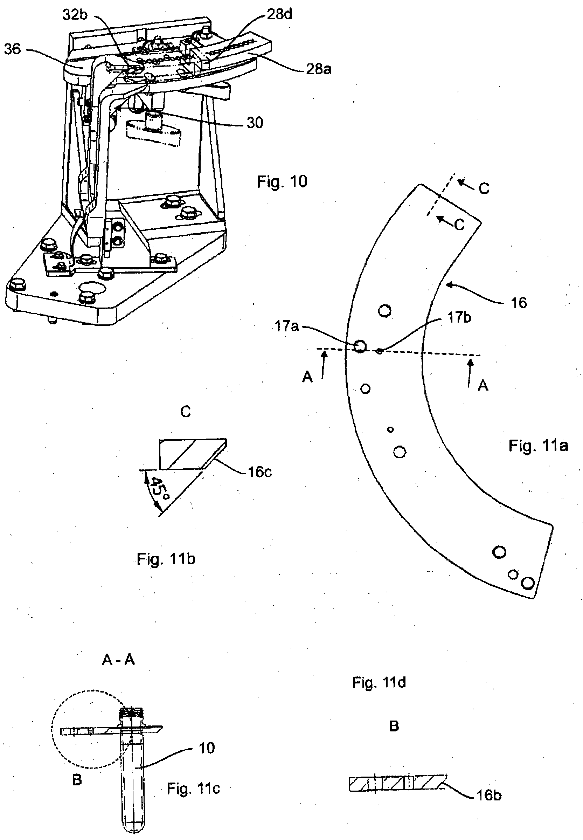

Figur 10 zeigt eine weitere perspektivische Darstellung einer Sensoreinrichtung 30 mit einer nachfolgenden Stützeinrichtung 28. In den Bereich zwischen der Sensoreinrichtung 30 und der Stützeinrichtung 28 werden die Behältnisse noch von den (nicht gezeigten) Eingriffselementen über ihre Mündung geführt. Die Ausgangssignale der beiden Tastschalter 32a und 32b werden an eine weitere Steuereinrichtung weitergeleitet um ggfs. fehlorientierte Behältnisse 10 ausleiten zu können.

Das Bezugszeichen 28d bezieht sich auf eine weitere Einführschräge der Stützeinrichtung 28, welche jedoch in radialer Richtung angeordnet ist und das Behältnis in radialer Richtung nach außen drängt.

Figur 11a zeigt eine Führungseinrichtung 16 in einer ersten Darstellung. Man erkennt, dass die Führungseinrichtung 16 einen kreisringsegmentförmigen Querschnitt aufweist und eine Reihe von Bohrungen 17a, 17b usw. aufweist, mit denen sie an der Übergabeeinheit 2 befestigbar ist.

Figur 11b zeigt eine Darstellung der Führungseinrichtung 16 entlang der Linien C-C aus Figur 11a. Man erkennt, dass sich die Führungseinrichtung auch in Umfangsrichtung verjüngt und eine Schrägfläche 16c aufweist. Diese Schrägfläche 16c ist dabei in einem Winkel von ca. 45° gegenüber der Horizontalen geneigt. Diese Neigung erlaubt eine sanftere Übernahme der Behältnisse durch die Eingriffselemente 6.

Figur 11c zeigt einen Blick entlang der Richtung A-A aus Figur 11a, wobei hier zur Illustration auch ein Behältnis 10 angedeutet ist. Man erkennt, dass sich die Führungseinrichtung 16 auch an ihrer radial außenliegenden Kante verjüngt (vgl. Fig. 11d) und der Tragring der Behältnisse 10 sich gegenüber dieser Außenkante abstützt.

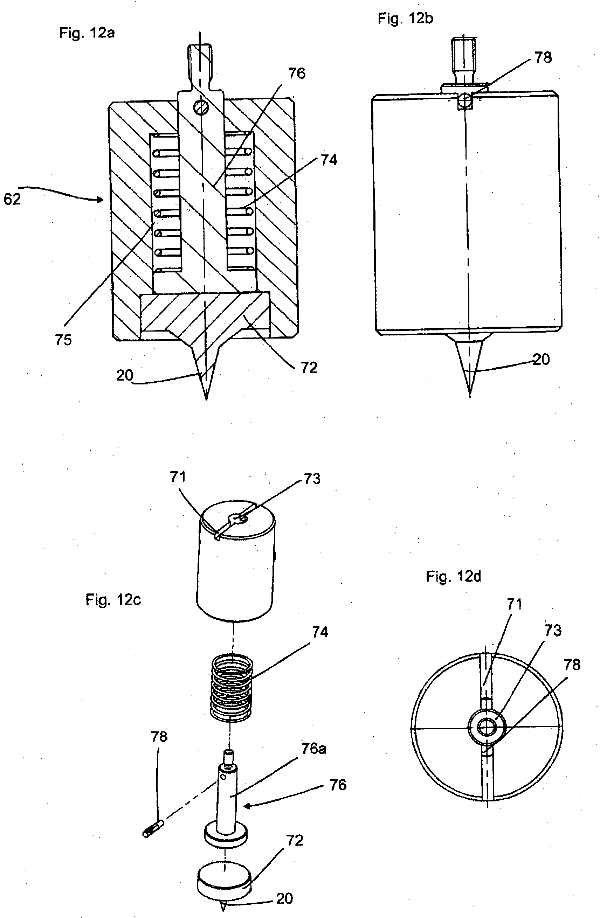

Figur 12a zeigt eine detaillierte Darstellung des Kopfes 62 eines Eingriffselementes 6. Man erkennt, dass dieser Kopf 62 im Inneren eine Ausnehmung 75 aufweist, in der wiederum eine Feder 74 vorgesehen ist, welche einen Stempel 76 in Figur 12a nach unten vorspannt. Auf diese Weise wird das Markierungsmittel 20 gegenüber der Führungseinrichtung 16 vorgespannt, um eine Markierung vorzunehmen. Gleichzeitig ruht ein Grundkörper 72 dieses Markierungsmittels in einer entsprechenden Ausnehmung des Kopfes 62, um nur in einem bestimmten Maße nach oben gepresst werden zu können. Während des Arbeitsbetriebs der Vorrichtung kann das Markierungsmittel von dem Kopf 62 entfernt werden.

Figur 12b zeigt eine Außenansicht des Kopfes 62. Man erkennt, dass hier ein Stift 78 vorgesehen ist, der verhindert, dass der Stempel 76 in Fig. 12a nach unten rutschen kann.

Figur 12c zeigt eine Explosionsansicht eines Kopfes 62. Wie in Figur 12c gezeigt, ruht dieser Stift 78 in einer spaltförmigen Ausnehmung 71. Der Grundkörper des Stempels 76 kann durch eine entsprechende Öffnung 73 geführt werden.Man erkennt, dass die Feder 74 letztlich das Markierungsmittel 18 nach unten vorspannt, jedoch ein Herausfallen des Stempels 76 aus dem Kopf 62 durch den erwähnten Stift 78 verhindert wird.

Figur 12d zeigt eine Draufsicht auf den Kopf 62, wobei hier auch der Stift 78 in die Ausnehmung 71 eingesetzt ist.

## Patentansprüche

1. Vorrichtung zum Erwärmen von Behältnissen (10) mit einer Transporteinrichtung (8), welche die Behältnisse (10) gegenüber wenigstens einer Heizeinrichtung (12) transportiert und einer Übergabeeinheit (2), welche in der Transportrichtung der Behältnisse (10) stromaufwärts bezüglich der Transporteinrichtung (8) angeordnet ist und welche die Behältnisse (10) in einem Übergabereich (B) vereinzelt an die Transporteinrichtung übergibt, wobei die Übergabeeinheit (2) eine drehbare Scheibe (14) aufweist, sowie eine radial außerhalb dieser drehbaren Scheibe (14) angeordnete Führungsschiene (16), und die drehbare Scheibe (14) sowie die Führungsschiene (16) derart angeordnet sind, dass die Behältnisse (10) zwischen einem Außenumfang der drehbaren Scheibe (14) und der Führungsschiene (16) transportierbar sind,
**dadurch gekennzeichnet, dass**
die Führungsschiene (16) bis in den Übergabebereich (B) ragt und die Position der Führungsschiene (16) gegenüber der Transporteinrichtung (8) verstellbar ist.

2. Vorrichtung nach Anspruch 1,
**dadurch gekennzeichnet, dass**
die Transporteinrichtung von Eingriffselementen (6) aufweist, welche in eine Mündung der Behältnisse (10) eingreifen.

3. Vorrichtung (1) nach wenigstens einem der vorangegangenen Ansprüche,
**dadurch gekennzeichnet, dass**
an einer Unterseite wenigstens eines Eingriffselements ein Positionserkennungselement (20) anordenbar ist.

4. Vorrichtung (1) nach wenigstens einem der vorangegangenen Ansprüche,
**dadurch gekennzeichnet, dass**
die drehbare Scheibe (14) eine Vielzahl von Aufnahmeausnehmungen für die Behältnisse (10) aufweist.

5. Vorrichtung (1) nach wenigstens einem der vorangegangenen Ansprüche,
**dadurch gekennzeichnet, dass**
die Führungsschiene (16) wenigstens zwei voneinander trennbare Segmente (16a, 16b) aufweist.

6. Vorrichtung (1) nach wenigstens einem der vorangegangenen Ansprüche,
**dadurch gekennzeichnet, dass**
die Führungsschiene (16) sich in der radialen Richtung der drehbaren Scheibe (14) in Richtung des Übergabebereichs (B) verjüngt.

7. Vorrichtung (1) nach wenigstens einem der vorangegangenen Ansprüche 2- 6,
**dadurch gekennzeichnet, dass**
die Transporteinrichtung (8) ein Transportrad aufweist, entlang dessen die Behältnisse (10) geführt werden sowie eine gegenüber dem Transportrad feststehende Stützeinrichtung (28), welche die Behältnisse (10) gegenüber dem Transportrad stützt.

8. Vorrichtung (1) nach wenigstens einem der vorangegangenen Ansprüche 2- 6,
**dadurch gekennzeichnet, dass**
die Übergabeeinheit (2) gegenüber der Transporteinrichtung (8) verschiebbar ist.

9. Vorrichtung (1) nach wenigstens einem der vorangegangenen Ansprüche,
**dadurch gekennzeichnet, dass**
die Vorrichtung (1) eine Sensoreinrichtung (30) aufweist, welche eine Position der Behältnisse (10) erfasst.

10. Vorrichtung zum Erwärmen von Behältnissen (10) mit einer Transporteinrichtung (8), welche die Behältnisse (10) gegenüber wenigstens einer Heizeinrichtung (12) transportiert und einer Übergabeeinheit (2), welche in der Transportrichtung der Behältnisse (10) stromaufwärts bezüglich der Transporteinrichtung (8) angeordnet ist und welche die Behältnisse (10) in einem Übergabereich (B) vereinzelt an die Transporteinrichtung übergibt, wobei die Übergabeeinheit eine drehbare Scheibe (14) aufweist, sowie eine radial außerhalb dieser drehbaren Scheibe (14) angeordnete Führungsschiene (16), und die drehbare Scheibe (14) sowie die Führungsschiene (16) derart angeordnet sind, dass die Behältnisse zwischen einem Außenumfang der drehbaren Scheibe (14) und der Führungsschiene (16) transportierbar sind,
**dadurch gekennzeichnet, dass**
die Vorrichtung eine Sensoreinrichtung (30) aufweist, welche eine Position der Behältnisse (10) erfasst.

11. Anlage mit einer Vorrichtung (1) nach wenigstens einem der vorangegangenen Ansprüche und mit einer stromabwärts bezüglich der Transporteinrichtung angeordneten Behandlungseinheit (40),
**dadurch gekennzeichnet, dass**
die Behandlungseinheit eine Steuerungseinrichtung (44) aufweist, welche mit der Sensoreinrichtung (30) kommuniziert.

12. Verfahren zum Erwärmen von Behältnissen (10), wobei die Behältnisse (10) mit einer Transporteinrichtung (8) gegenüber wenigstens einer Heizeinrichtung (12) transportiert werden und von einer Übergabeeinheit (2), welche in der Transportrichtung der Behältnisse (10) stromaufwärts bezüglich der Transporteinrichtung (8) angeordnet ist, in einem Übergabebereich (B) vereinzelt an die Transporteinrichtung (8) übergeben werden, wobei die Behältnisse (10) in der Übergabeeinheit (2) zwischen einer drehbaren Scheibe (14) und einer radial außerhalb dieser drehbaren Scheibe angeordneten Führungsschiene (16) geführt werden,
**dadurch gekennzeichnet, dass**
die Behältnisse (10) bis in den Übergabebereich (B) von der Führungsschiene (16) geführt werden und die Position der Führungsschiene (16) gegenüber der Transporteinrichtung (8) verstellbar ist.

## Claims

1. Apparatus for heating containers (10), comprising a transport device (8) which transports the containers (10) relative to at least one heating device (12), and a transfer unit (2) which is arranged upstream of the transport device (8) in the transport direction of the containers (10) and which transfers the containers (10) individually to the transport device in a transfer region (B), wherein the transfer unit (2) comprises a rotatable disc (14) and also a guide rail (16) arranged radially outside this rotatable disc (14), and the rotatable disc (14) and the guide rail (16) are arranged in such a way that the containers (10) can be transported between an outer circumference of the rotatable disc (14) and the guide rail (16), **characterised in that** the guide rail (16) extends as far as the transfer region (B) and the position of the guide rail (16) can be adjusted relative to the transport device (8).

2. Apparatus according to claim 1, **characterised in that** the transport device comprises engagement elements (6) which engage in a mouth of the containers (10).

3. Apparatus (1) according to at least one of the preceding claims, **characterised in that** a position detection element (20) can be arranged on an underside of at least one engagement element.

4. Apparatus (1) according to at least one of the preceding claims, **characterised in that** the rotatable disc (14) comprises a plurality of receiving recesses for the containers (10).

5. Apparatus (1) according to at least one of the preceding claims, **characterised in that** the guide rail (16) comprises at least two segments (16a, 16b) which can be separated from one another.

6. Apparatus (1) according to at least one of the preceding claims, **characterised in that** the guide rail (16) tapers in the radial direction of the rotatable disc (14) towards the transfer region (B).

7. Apparatus (1) according to at least one of the preceding claims 2 to 6, **characterised in that** the transport device (8) comprises a transport wheel, along which the containers (10) are guided, and also a support device (28) which is fixed relative to the transport wheel and which supports the containers (10) against the transport wheel.

8. Apparatus (1) according to at least one of the preceding claims 2 to 6, **characterised in that** the transfer unit (2) is displaceable relative to the transport device (8).

9. Apparatus (1) according to at least one of the preceding claims, **characterised in that** the apparatus (1) has a sensor device (30) which detects a position of the containers (10).

10. Apparatus for heating containers (10), comprising a transport device (8) which transports the containers (10) relative to at least one heating device (12), and a transfer unit (2) which is arranged upstream of the transport device (8) in the transport direction of the containers (10) and which transfers the containers (10) individually to the transport device in a transfer region (B), wherein the transfer unit comprises a rotatable disc (14) and also a guide rail (16) arranged radially outside this rotatable disc (14), and the rotatable disc (14) and the guide rail (16) are arranged in such a way that the containers can be transported between an outer circumference of the rotatable disc (14) and the guide rail (16), **characterised in that** the apparatus has a sensor device (30) which detects a position of the containers (10).

11. Installation comprising an apparatus (1) according to at least one of the preceding claims and comprising a treatment unit (40) arranged downstream of the transport device, **characterised in that** the treatment unit has a control device (44) which communicates with the sensor device (30).

12. Method for heating containers (10), wherein the containers (10) are transported relative to at least one heating device (12) by a transport device (8) and are transferred individually to the transport device (8) in a transfer region (B) by a transfer unit (2) which is arranged upstream of the transport device (8) in the transport direction of the containers (10), wherein the containers (10) are guided in the transfer unit (2) between a rotatable disc (14) and a guide rail (16) arranged radially outside this rotatable disc, **characterised in that** the containers (10) are guided by the guide rail (16) as far as the transfer region (B) and the position of the guide rail (16) can be adjusted relative to the transport device (8).

## Revendications

1. Dispositif servant à réchauffer des contenants (10), équipé d'un système de transport (8), qui transporte les contenants (10) par rapport au moins à un système de chauffage (12), et d'une unité de transfert (2), qui est disposée, dans la direction de transport des contenants (10), en amont par rapport au système de transport (8) et qui transfère les contenants (10) dans une zone de transfert (B) de manière isolée au système de transport, sachant que l'unité de transfert (2) présente un plateau (14) rotatif et un rail de guidage (16) disposé radialement à l'extérieur dudit plateau (14) rotatif, et sachant que le plateau (14) rotatif et le rail de guidage (16) sont disposés de telle manière que les contenants (10) peuvent être transportés entre une périphérie extérieure du plateau (14) rotatif et le rail de guidage (16),
**caractérisé en ce que**
le rail de guidage (16) dépasse jusque dans la zone de transfert (B), et **en ce que** la position du rail de guidage (16) peut être ajustée par rapport au système de transport (8).

2. Dispositif selon la revendication 1,
**caractérisé en ce que**
le système de transport présente des éléments de prise (6), qui viennent en prise avec une embouchure des contenants (10).

3. Dispositif (1) selon au moins l'une quelconque des revendications précédentes,
**caractérisé en ce qu'**
un élément d'identification de position (20) peut être disposé au niveau d'un côté inférieur d'au moins un élément de prise.

4. Dispositif (1) selon au moins l'une quelconque des revendications précédentes,
**caractérisé en ce que**
le plateau (14) rotatif présente une pluralité d'évidements de logement destinés aux contenants (10).

5. Dispositif (1) selon au moins l'une quelconque des revendications précédentes,
**caractérisé en ce que**
le rail de guidage (16) présente au moins deux segments (16a, 16b) pouvant être séparés les uns des autres.

6. Dispositif (1) selon au moins l'une quelconque des revendications précédentes,
**caractérisé en ce que**
le rail de guidage (16) se rétrécit dans la direction radiale du plateau (14) rotatif en direction de la zone de transfert (B).

7. Dispositif (1) selon au moins l'une quelconque des revendications précédentes 2 - 6,
**caractérisé en ce que**
le système de transport (8) présente un chemin de transport, le long duquel les contenants (10) sont guidés, et un système de support (28) immobile par rapport au chemin de transport, lequel supporte les contenants (10) par rapport au chemin de transport.

8. Dispositif (1) selon au moins l'une quelconque des revendications précédentes 2 à 6,
**caractérisé en ce que**
l'unité de transfert (2) peut être déplacée par coulissement par rapport au système de transport (8).

9. Dispositif (1) selon au moins l'une quelconque des revendications précédentes,
**caractérisé en ce que**
le dispositif (1) présente un système de capteur (30), qui détecte une position des contenants (10).

10. Dispositif servant à réchauffer des contenants (10), équipé d'un système de transport (8), qui transporte les contenants (10) par rapport au moins à un système de chauffage (12), et d'une unité de transfert (2), qui est disposée, dans la direction de transport des contenants (10), en amont par rapport au système de transport (8) et qui transfère les contenants (10), dans une zone de transfert (B), de manière isolée au système de transport, sachant que l'unité de transfert présente un plateau (14) rotatif et un rail de guidage (16) disposé radialement à l'extérieur dudit plateau (14) rotatif, et sachant que le plateau (14) rotatif et le rail de guidage (16) sont disposés de telle manière que les contenants peuvent être transportés entre une périphérie extérieure du plateau (14) rotatif et le rail de guidage (16),
**caractérisé en ce que**
le dispositif présente un système de capteur (30), qui détecte une position des contenants (10).

11. Installation équipée d'un dispositif (1) selon au moins l'une quelconque des revendications précédentes et d'une unité de traitement (40) disposée en aval par rapport au système de transport,
**caractérisée en ce que**
l'unité de traitement présente un système de commande (44), qui communique avec le système de capteur (30).

12. Procédé servant à réchauffer des contenants (10), sachant que les contenants (10) sont transportés à l'aide d'un système de transport (8) par rapport au moins à un système de chauffage (12) et qu'ils sont transférés dans une zone de transfert (B) de manière isolée au système de transport (8) par une unité de transfert (2), qui est disposée, dans la direction de transport des contenants (10), en amont par rapport au système de transport (8), sachant que les contenants (10) sont guidés dans l'unité de transfert (2) entre un plateau (14) rotatif et un rail de guidage (16) disposé radialement à l'extérieur dudit plateau rotatif,
**caractérisé en ce que**
les contenants (10) sont guidés jusque dans la zone de transfert (B) par le rail de guidage (16), et **en ce que** la position du rail de guidage (16) peut être ajustée par rapport au système de transport (8).
